(19) Europäisches Patentamt
European Patent Office
Office européen des brevets

(11) **EP 1 756 688 B1**

(12) **FASCICULE DE BREVET EUROPEEN**

(45) Date de publication et mention de la délivrance du brevet:
**12.09.2007 Bulletin 2007/37**

(21) Numéro de dépôt: **05776478.9**

(22) Date de dépôt: **14.06.2005**

(51) Int Cl.:
*G05D 1/02* (2006.01)    *B62D 6/00* (2006.01)

(86) Numéro de dépôt international:
**PCT/FR2005/050441**

(87) Numéro de publication internationale:
**WO 2006/000732 (05.01.2006 Gazette 2006/01)**

(54) **PROCEDE D'ESTIMATION DE L'ECART EVALUE ENTRE LA POSITION D'UN VEHICULE ET UNE TRAJECTOIRE THEORIQUE**

VERFAHREN ZUR SCHÄTZUNG DER AUSGEWERTETEN ABWEICHUNG ZWISCHEN DER POSITION EINES FAHRZEUGES UND EINER THEORETISCHEN TRAJEKTORIE

METHOD OF ESTIMATING THE EVALUATED DEVIATION BETWEEN THE POSITION OF A VEHICLE AND A THEORETICAL TRAJECTORY

(84) Etats contractants désignés:
**AT BE BG CH CY CZ DE DK EE ES FI FR GB GR HU IE IS IT LI LT LU MC NL PL PT RO SE SI SK TR**

(30) Priorité: **14.06.2004 FR 0406409**

(43) Date de publication de la demande:
**28.02.2007 Bulletin 2007/09**

(73) Titulaires:
- **RENAULT TRUCKS**
  **69800 St Priest (FR)**
- **Renault S.A.S., Société par actions simplifiée**
  **92100 BOULOGNE BILLANCOURT (FR)**

(72) Inventeurs:
- **CLAEYS, Xavier**
  **F-78000 VERSAILLES (FR)**
- **GARNIER, Laurent**
  **F-57180 Terville (FR)**

(74) Mandataire: **Palix, Stéphane**
  **Cabinet Laurent et Charras**
  **20, rue Louis Chirpaz**
  **B.P. 32**
  **69131 Ecully Cedex (FR)**

(56) Documents cités:
EP-A- 1 396 732    US-A1- 2002 041 229
US-B1- 6 292 752

EP 1 756 688 B1

## EP 1 756 688 B1

**Description**

**Domaine technique**

L'invention se rattache aux systèmes d'assistance de conduite pour véhicules automobiles. Elle vise plus précisément un procédé d'estimation de l'écart entre une anticipation de la position d'un véhicule, et une trajectoire théorique. Ce procédé peut être utilisé pour différents objectifs, et notamment dans des procédés de conduite automatique par lequel l'angle de braquage des roues est commandé de façon automatisée pour un suivi de trajectoire. Ce procédé peut également être utilisé pour détecter des cas de sorties de route, ou plus généralement dans tous procédés dans lesquels il est utile de connaître par anticipation la projection de la position du véhicule en avant par comparaison avec une position théorique.

L'invention peut être appliquée, comme décrite de manière plus détaillée dans le reste de la description, à des véhicules industriels, notamment des camions, mais elle peut bien entendu trouver des avantages pour des véhicules particuliers

**Techniques antérieures**

De façon générale, les systèmes de suivi de trajectoire automatisés peuvent fonctionner en utilisant les lignes de marquage au sol tracées sur la chaussée pour définir les voies de circulation.

Ainsi, on connaît des systèmes d'assistance à la conduite qui utilisent des caméras destinées à surveiller la position des lignes situées de part et d'autre du véhicule, et définissant la voie de circulation. L'analyse des images élaborées par ces caméras permet de définir la position relative du véhicule par rapport à ces deux références. Cette position peut être comparée à une trajectoire théorique interpolée à partir des images de ces deux lignes tracées sur la chaussée. Cette trajectoire théorique se situe généralement sensiblement en position médiane par rapport à ces deux lignes tracées sur la chaussée. En jouant sur la commande de braquage du véhicule, il est ainsi possible de minimiser l'écart entre la trajectoire mesurée et la trajectoire théorique.

On conçoit que la distance à laquelle est effectuée la mesure de cet écart est importante, car elle a des répercutions sur différents aspects de la chaîne globale de commande du braquage. En effet, si cette mesure est réalisée au plus près du niveau longitudinal courant du véhicule, et en "visant" donc le moins loin possible, on a besoin d'une commande très réactive. Ce facteur pousse donc à utiliser une mesure plus en avant, car le fait d'avoir une commande réactive engendre un grande sensibilité du système à toute perturbation, et particulièrement à des perturbations sur la mesure de position du véhicule.

Toutefois, on ne prend alors pas en compte l'évolution de la trajectoire réelle du véhicule, entre sa position courante et la zone d'acquisition de l'image de marquage au sol, cette évolution étant potentiellement plus élevée si la distance de visée est plus grande. On conçoit donc qu'il existe deux tendances contradictoires.

Par ailleurs, l'analyse des images du système de vision nécessite des opérations de traitement et de filtrage complexes, requérant donc un temps de calcul relativement important. Ce temps de calcul est lié à la technologie utilisée pour le système de vision, à la précision de la mesure, ou encore la fréquence de rafraîchissement de celle ci. En effet, les cellules CCD des caméras de vision ne peuvent pas être rafraîchies trop rapidement, d'où un temps de traitement élevé. Ce temps de calcul peut être supérieur au temps nécessaire pour parcourir la distance qui sépare le véhicule de la zone de visée, notamment à vitesse élevée. Autrement dit, l'information élaborée par le système de mesure peut être disponible alors que le véhicule a déjà dépassé la position par rapport à laquelle elle est calculée. C'est pourquoi il est nécessaire d'effectuer des mesures en prenant des repères situés à une distance suffisamment éloignée du véhicule, pour compenser ces temps de calcul.

En d'autres termes, on conçoit qu'une mesure de position statique peut être déterminée pour une distance de visée donnée, mais que la mesure dynamique est faussée par le temps de calcul de la position et l'avancement du véhicule. Ce phénomène s'accentue avec la vitesse.

En outre, l'allongement de ces distances de visée se fait au détriment de la précision sur le calcul de l'écart, puisque dans l'intervalle, le véhicule peut avoir une trajectoire qui a évolué.

On connait par ailleurs du document US 2002/0041229A un procédé d'estimation de l'écart entre la position d'un véhicule et une trajectoire théorique, ledit écart étant déterminé par comparaison d'une évaluation à partir de mesures élaborées, par un dispositif de mesure de la position du véhicule par rapport à des repères liés à la chaussée et d'une évaluation de la position courante du véhicule.

Par ailleurs, il peut être intéressant de chercher à calculer un écart de trajectoire à une distance donnée (définie par l'utilisateur) en avant du véhicule pour faciliter la commande, avec la possibilité de la faire évoluer à la demande pour obtenir une information adaptée à la vitesse du véhicule.

Le problème que se propose donc de résoudre l'invention est celui d'obtenir une évaluation de l'écart qui soit à la fois précise, et qui soit disponible avec des temps de calcul réduits, et à distance paramétrable.

2

Un des objectifs de l'invention est de garantir une mesure filtrée du système qui soit donc facilement exploitable par le système de commande, mais sans pour autant retarder cette mesure.

## Exposé de l'invention

L'invention concerne donc un procédé de d'estimation de l'écart évalué entre la position d'un véhicule et une trajectoire théorique.

Conformément à l'invention, cet écart est évalué en combinant deux composantes.

Une première composante correspond à des mesures élaborées par un dispositif de mesure de la position du véhicule par rapport à des repères liés à la chaussée.

Une deuxième composante est une estimation de l'évolution de la trajectoire du véhicule, à partir des paramètres de modélisation mécanique du véhicule, ainsi que des paramètres cinématiques du véhicule tels que la vitesse du véhicule ou l'angle de braquage de son essieu directeur.

Autrement dit, l'invention consiste à évaluer l'écart caractéristique en ne prenant pas seulement en compte les informations de mesures réelles élaborées par le dispositif de mesure, mais en les combinant avec une évaluation faite à partir d'un modèle de la cinématique et de la dynamique du véhicule qui utilise quant à lui des informations cinématiques élaborées par des systèmes de mesure, du type capteur de vitesse ou centrale inertielle, qui ne nécessite pas de filtrage et d'analyse consommatrice de temps de calcul.

Ainsi, cet écart est évalué en combinant des résultats de mesure réels qu'il n'est donc pas nécessaire de filtrer de façon très exigeante, puisqu'elles sont combinées avec une estimation faite à partir de la mécanique de cinématique obtenue avec une grande fiabilité et quasiment sans retard.

Dans un cas particulier, le dispositif de mesure de la position du véhicule peut élaborer cette position en prenant en compte des repères liés à la chaussée situés en avant du véhicule à une distance prédéterminée. Cette distance peut être optimisée, en fonction du capteur CCD des caméras du système de vision, de l'optique des caméras, des durées de traitement, etc. Cette distance est choisie suffisamment importante pour permettre les traitements et autres filtrages des informations issues du dispositif de mesure réelle. Autrement dit, les traitements réalisés par le système de vision peuvent se limiter à ceux strictement nécessaires pour obtenir une information fiable.

Avantageusement en pratique, le modèle délivrant l'estimation de l'évolution de la trajectoire prend en compte différents paramètres cinématiques, notamment la vitesse de lacet.

## Description sommaire des figures

La manière de réaliser l'invention ainsi que les avantages qui en découlent ressortiront bien de la description du mode de réalisation qui suit, donné à titre d'exemple, et non limitatif.

Ce mode de réalisation est illustré à l'appui des figures annexées dans lesquelles :

La figure 1 est un schéma bloc simplifié montrant le fonctionnement du procédé conforme à l'invention dans un cas particulier de réalisation.

La figure 2 est une représentation schématique des différents paramètres cinématiques utilisés dans un modèle particulier utilisé dans une mise en oeuvre de l'invention.

## Manière de réaliser l'invention

Comme déjà évoqué, l'invention concerne un procédé d'estimation de la position relative d'un véhicule par rapport à une trajectoire théorique qui peut notamment être utilisé sur un véhicule équipé d'un système de suivi automatique de trajectoire. Toutefois, et comme déjà évoqué, ce procédé peut également être utilisé à d'autres fins.

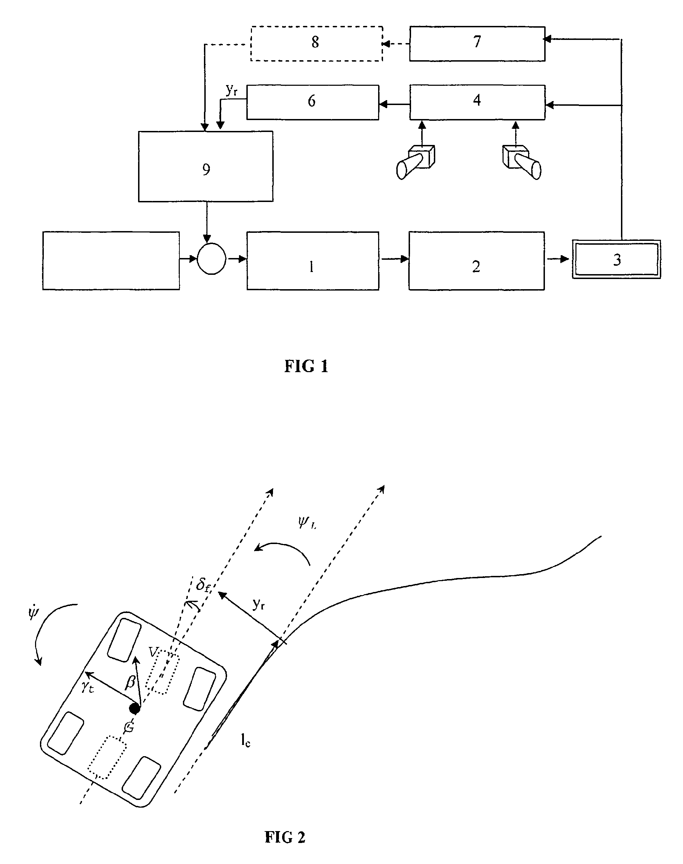

Ainsi, comme illustré à la figure 1, le procédé met en oeuvre de façon classique un étage 1 générant un ou plusieurs signaux de commande d'un actionneur 2 agissant sur le braquage du véhicule. Il peut notamment s'agir d'un vérin modifiant l'angle de braquage des roues directrices.

Conformément à l'invention, l'évolution de la trajectoire du véhicule 3 est évaluée par au moins deux dispositifs de nature différente. Ainsi, un premier dispositif 4 élabore une mesure à partir de repères liés à la chaussée. Ces repères peuvent être fixes, et constitués par des lignes de marquage au sol.

De façon plus générale, le procédé conforme à l'invention doit recevoir des informations provenant d'un dispositif de mesure de la trajectoire par rapport à un référentiel fixe, ce dispositif pouvant être très variable et indépendant des moyens assurant la mise en oeuvre du procédé de l'invention.

Ces mesures sont ensuite filtrées 6 et analysées pour élaborer une variable $y_r$ représentative de l'écart de la position du véhicule par rapport à la trajectoire théorique définie par rapport à ces repères fixes.

Un second dispositif 7 de mesure permet d'élaborer des paramètres relatifs à la cinématique du véhicule, pour prédire l'évolution de la trajectoire du véhicule. Ce dispositif de mesure s'entend au sens large. En effet, les informations peuvent être générées par différents capteurs présents à l'intérieur du véhicule, et utilisés pour d'autres fonctions. On peut notamment citer un capteur de vitesse utilisé pour les fonctions de tachymétrie, ou bien encore une centrale inertielle élaborant les informations relatives à l'accélération du véhicule, également utilisé dans le contrôle de trajectoire. De même, une information relative, donnée par le système de vision, peut être utile dans ce cadre, et se substituer à l'information concernant la vitesse de lacet. On peut par exemple citer la courbure de la trajectoire qui peut être déterminée par l'analyse des images issues des caméras.

Ces informations sont traitées de façon calculatoire par un modèle théorique 8 utilisant une modélisation mécanique du véhicule. Ce modèle permet d'élaborer une estimation de l'évolution de la trajectoire en prenant en compte uniquement les paramètres cinématiques, et en faisant abstraction des mesures effectuées par l'autre dispositif.

Conformément à l'invention, l'écart $y_r$ mesuré par le dispositif spécifique 6 et l'estimation calculée 8 de l'évolution de la trajectoire sont combinés 9, afin d'élaborer une variable correspondant à l'écart estimé entre la position du véhicule et la trajectoire théorique à une distance $I_c$ en avant du véhicule.

Il est important de noter que cet écart estimé résulte de la combinaison de deux composantes distinctes. Une première composante est issue de mesures élaborées par un dispositif 4 impliquant des traitements et des filtrages importants, dus à la technologie des capteurs CCD, à savoir des dispositifs d'analyse d'image pour le suivi des marquages au sol. Cette première composante est combinée avec une seconde composante issue d'un calcul théorique 8 à partir de la mesure cinématique d'une précision et d'une fiabilité supérieure.

Autrement dit, les informations issues du système de mesure de suivi des lignes de marquage au sol peuvent être filtrées de manière moins approfondie que dans l'hypothèse où elles seraient les seules informations utilisées pour le suivi de trajectoire.

Par conséquent, il est possible d'utiliser des informations qui sont traitées avec un degré de filtrage moindre, et qui peuvent donc être mesurées à une distance relativement courte, de l'ordre de quelques dizaines de mètres en amont du véhicule.

Un exemple de modèle du véhicule peut être le suivant, en relation avec les variables illustrées en figure 2. Ce modèle utilise les données géométriques et mécaniques définies ci-après:

$M$ (kg) :      Masse totale du véhicule

$I_\psi$ (N.m) :      Inertie du véhicule autour d'un axe vertical passant par son centre de gravité $G$

$L_1$ (m):      Distance de $G$ à l'essieu avant

$L_2$ (m) :      Distance de $G$ à l'essieu arrière

$B_1$ (m) :      Empattement avant

$B_2$ (m) :      Empattement arrière

$D_1$ (N/rad) :      Rigidité de dérive avant

$D_2$ (N/rad):      Rigidité de dérive arrière

$Bal$ (m) :      Rayon de ballant avant

$I_c$(m) :      Distance de visée du système de suivi des lignes de marquage au sol, également appelée distance de "preview".

Le modèle utilise des variables cinématiques suivantes:

$\delta_f$ (rad) : Angle de braquage, que font les roues avec l'axe longitudinal du véhicule.

$V$ (m/s) : Vitesse du véhicule

$\dot{\psi}$ (rad/s) : Vitesse de lacet, à savoir la vitesse de rotation du véhicule autour de son centre de gravité suivant un axe vertical.

$\beta$ (rad) : Angle de dérive, que fait le vecteur vitesse du véhicule avec son axe longitudinal.

$\gamma_t$ (m/s$^2$) : Accélération latérale, mesurée au centre de gravité G.

$y_r$ (m) : Ecart par rapport à la trajectoire

$\psi_L$ (rad) : Angle relatif véhicule / trajectoire

$\dot{\psi}_d$ (rad/s) : Vitesse de lacet de la trajectoire

Le modèle mécanique, traduisant les lois générales de la mécanique appliquées à l'ensemble des variables ci dessus, se résume par la combinaison des équations qui suivent:

$$M\gamma_t = F_{Y1} + F_{Y2}$$

$$I_\psi \dot{\psi} = L_1 F_{Y1} - L_2 F_{Y2} - \frac{B_1}{2}\left(F_{X11} - F_{X12}\right) - \frac{B_2}{2}\left(F_{X21} - F_{X22}\right)$$

$$Fy_i = -D_i\alpha_i$$

$$V_x\left(\delta_f - \alpha_1\right) = V_x\beta + L_1\dot{\psi}$$

$$V_x\alpha_2 = V_x\beta - L_2\dot{\psi}$$

$$\gamma_t = V\left(\dot{\psi} + \dot{\beta}\right)$$

L'équation d'état qui est associée est la suivante, en négligeant les petits angles, et dans l'hypothèse de petits angles:

$$\frac{\partial}{\partial t}\begin{bmatrix} \dot{\psi} \\ \beta \end{bmatrix} = \begin{pmatrix} -\dfrac{D_1 L_1^2 + D_2 L_2^2}{VI_\psi} & \dfrac{D_2 L_2 - D_1 L_1}{I_\psi} \\ -1 + \dfrac{D_2 L_2 - D_1 L_1}{MV^2} & -\dfrac{D_1 + D_2}{MV} \end{pmatrix}\begin{bmatrix} \dot{\psi} \\ \beta \end{bmatrix} + \begin{bmatrix} \dfrac{D_1 L_1}{I_\psi} \\ \dfrac{D_1}{MV} \end{bmatrix}\delta_f$$

D'autre part, l'équation qui régit l'écart par rapport à la trajectoire est donnée par: $\dot{\psi}_L = \dot{\psi} - \dot{\psi}_d$ et $\dot{y}_r = V(\beta - \psi_L) + l_c\dot{\psi}$

Pour effectuer le traitement des mesures, on utilise un observateur du vecteur d'état $X = [\dot{\psi}\ \beta\ \psi_L\ y_r]$. Les mesures nécessaires pour réaliser cet observateur sont la vitesse de lacet $\dot{\psi}$, l'écart par rapport à la trajectoire $y_r$, l'angle de braquage des roues $\delta_f$, et la vitesse du véhicule V. On notera qu'il est possible en utilisant la courbure de la trajectoire $\psi_L$ d'améliorer les performances de l'observateur. Cet observateur s'écrit sous la forme d'équations différentielles:

$$\dot{\hat{X}} = A\hat{X} + B_1\delta_f + K_{obs}\left(Y - C\hat{X}\right)$$

$$\hat{Y} = C\hat{X} + D\delta_f$$

avec

$$A = \begin{bmatrix} -\dfrac{D_1 L_1^2 + D_2 L_2^2}{V I_\psi} & \dfrac{D_2 L_2 - D_1 L_1}{I_\psi} & 0 & 0 \\ -1 + \dfrac{D_2 L_2 - D_1 L_1}{M V^2} & -\dfrac{D_1 + D_2}{M V} & 0 & 0 \\ 0 & 1 & 0 & 0 \\ V & l_c & V & 0 \end{bmatrix}, \quad B_1 = \begin{bmatrix} \dfrac{D_1 L_1}{I_\psi} \\ \dfrac{D_1}{M V} \\ 0 \\ 0 \end{bmatrix}, \quad C = \begin{bmatrix} 1 & 0 & 0 & 0 \\ 0 & 0 & 0 & 1 \end{bmatrix},$$

et

$$D = \begin{bmatrix} 0 & 0 \\ 0 & 0 \end{bmatrix}$$

Le choix des gains du vecteurs $K_{obs}$ de l'observateur est réalisé en utilisant les principes de commande classique, par exemple par la méthode de placement de pôles robustes, ou en posant un problème d'optimisation LQ.

L'observateur permet de s'affranchir de dispositifs coûteux de traitement des images de la caméra qui permettrait de recomposer des éventuelles informations utiles. D'autre part les informations fournies par l'observateur sont naturellement filtrées suivant le réglage qui est choisi lors de la conception. Ceci permet de réduire les effets indésirables dus aux capteurs utilisés. Les données brutes provenant du système d'acquisition vidéo peuvent être quasiment directement exploitées par l'observateur.

En outre, la performance du système ainsi que la qualité des estimations peuvent être améliorées par traitement numérique complémentaire. Ce type de traitement peut prendre en compte certains disfonctionnements du système d'acquisition vidéo. Par exemple, si l'on perd l'image de l'une des deux lignes de marquage au sol, on peut la reconstituer virtuellement en calculant sa valeur à partir de la ligne restante et de la largeur de voie précédemment mesurée. Dans le même esprit, le modèle véhicule peut être affiné ou simplifié à partir d'autres informations, comme par exemple l'estimation de la masse du véhicule, la détection d'adhérence, etc....

De plus, on peut souvent constater des retards importants subis par les mesures fournies par la caméra, car les opérations de traitement d'image sont généralement assez longues. Ce traitement des données d'entrées de l'observateur permet l'adaptation de la fréquence d'échantillonnage des mesures. En effet, la mesure de l'écart latéral fournie par une caméra est généralement fortement retardée et mal cadencée.

L'avantage de la méthode par observateur est qu'elle peut s'adapter facilement à tout type de système d'acquisition vidéo. Seul les paramètres du vecteur $K_{obs}$ sont à redéfinir avec un nouveau système, en tenant compte notamment de la dynamique de ces capteurs. Le modèle dynamique du véhicule est lui aussi facilement adaptable en vue d'autres applications.

En pratique, l'utilisation des mesures de la vitesse du véhicule V, de l'écart absolu $y_r$, et de la vitesse de lacet $\dot{\psi}$, bien que la plus facilement accessible avec les dispositifs existant, n'est pas la seule combinaison possible pour mettre en oeuvre l'invention. D'autres variables peuvent être utilisées, dans la mesure où elles répondent aux conditions d'observabilité .

Il ressort de ce qui précède que le procédé conforme à l'invention permet d'améliorer les performances des systèmes de suivi de trajectoire, car il permet d'obtenir une évaluation de l'écart par rapport à la trajectoire théorique en effectuant une visée à distance choisie du véhicule, avec donc une précision meilleure, et dans un temps inférieur aux systèmes existants. L'intérêt de l'invention est de fournir une mesure de position légèrement en avant du véhicule et ce quelle que soit sa vitesse. L'invention permet de s'affranchir de certaines contraintes liées au système de traitement d'images, avec de possibles gains en coût, et en temps de calcul. Elle permet également de choisir indépendamment du système de vision l'endroit où on obtient l'estimation de la position, de traiter les données issues du système de vision qui ne sont souvent pas très propres et mal séquencées, et de générer une information bien formatée exploitable par la commande de la trajectoire. Elle assure une interprétation de l'écart (quelque soit sa nature et l'endroit où la mesure est faite), de filtrer pour réaliser une estimation souhaitée en avant du véhicule.

**Revendications**

1. Procédé d'estimation de l'écart évalué entre la position d'un véhicule et une trajectoire théorique, **caractérisé en ce que** ledit écart est évalué en combinant :

   ■ des mesures élaborées par un dispositif de mesure de la position du véhicule par rapport à des repères liés à la chaussée ;
   ■ une estimation de l'évolution de la trajectoire du véhicule à partir de la vitesse et de l'angle de braquage de l'essieu directeur.

2. Procédé selon la revendication 1, **caractérisé en ce que** le dispositif de mesure de la position du véhicule élabore une mesure de la position du véhicule en prenant en compte des repères liés à la chaussée situés en avant du véhicule, à une distance prédéterminée ($1_c$).

3. Procédé selon la revendication 2, **caractérisé en ce que** la distance prédéterminée est variable.

4. Procédé selon la revendication 3, **caractérisé en ce que** la distance prédéterminée est variable en fonction de la vitesse du véhicule.

5. Procédé selon la revendication 1, **caractérisé en ce que** les repères liés à la chaussée sont formés par les lignes de marquage au sol.

6. Procédé selon la revendication 1, **caractérisé en ce que** l'estimation de l'évolution de la trajectoire du véhicule prend en compte la vitesse angulaire de lacet du véhicule.


**Claims**

1. A method of estimating the evaluated deviation between the position of a vehicle and theoretical trajectory, **characterised in that** said deviation is evaluated by combining:

   • measurements taken by a device for measuring the position of the vehicle relative to identification marks associated with the carriageway;
   • the estimated change in the trajectory of the vehicle based on the velocity and the steer angle of the steering axle.

2. A method as claimed in claim 1, **characterised in that** the device for measuring the position of the vehicle outputs a measurement of the position of the vehicle by taking into account the identification marks associated with the carriageway located in front of the vehicle at a predetermined distance ($1_c$).

3. A method as claimed in claim 2, **characterised in that** the predetermined distance is variable.

4. A method as claimed in claim 3, **characterised in that** the predetermined distance varies depending on the speed of the vehicle.

5. A method as claimed in claim 1, **characterised in that** the identification marks associated with the carriageway are formed by lines marked on the ground.

6. A method as claimed in claim 1, **characterised in that** the estimated change in the trajectory of the vehicle takes into account the angular rate of yaw of the vehicle.


**Patentansprüche**

1. Verfahren zur Schätzung der Abweichung, die zwischen der Position eines Fahrzeugs und einer theoretischen Spur ermittelt wird, **dadurch gekennzeichnet, dass** diese Abweichung durch Verknüpfung von:

   ■ Messungen, die von einer Vorrichtung zur Messung der Position des Fahrzeugs im Verhältnis zu straßengebundenen Bezugspunkten erstellt werden,

■ einer Schätzung des Verlaufs der Fahrzeugspur anhand der Geschwindigkeit und des Einschlagwinkels der Lenkachse

ermittelt wird.

2. Verfahren nach Anspruch 1, **dadurch gekennzeichnet, dass** die Vorrichtung zur Messung der Position des Fahrzeugs eine Messung der Position des Fahrzeugs erstellt, indem sie straßengebundene Bezugspunkte, die sich vor dem Fahrzeug in einer vorbestimmten Entfernung ($1_c$) befinden, erfasst.

3. Verfahren nach Anspruch 2, **dadurch gekennzeichnet, dass** die vorbestimmte Entfernung veränderlich ist.

4. Verfahren nach Anspruch 3, **dadurch gekennzeichnet, dass** die vorbestimmte Entfernung in Abhängigkeit von der Geschwindigkeit des Fahrzeugs veränderlich ist.

5. Verfahren nach Anspruch 1, **dadurch gekennzeichnet, dass** die straßengebundenen Bezugspunkte von den Bodenmarkierungslinien gebildet werden.

6. Verfahren nach Anspruch 1, **dadurch gekennzeichnet, dass** bei der Schätzung des Verlaufs der Fahrzeugspur die Gierwinkelgeschwindigkeit des Fahrzeugs berücksichtigt wird.

**FIG 1**

**FIG 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020041229 A